# EUROPEAN PATENT APPLICATION

(11) **EP 1 721 925 A1**
(43) Date of publication of application: **15.11.2006**
(21) Application number: 05719356.7
(22) Date of filing: 21.02.2005
(51) Int. Cl.: C08G 77/06, C03B 8/02

(54) **ORGANIC-INORGANIC HYBRID VITREOUS MATERIAL AND METHOD FOR PRODUCING SAME**

(30) Priority: 27.02.2004 JP 2004053652
(71) Applicant: CENTRAL GLASS COMPANY, LIMITED, Ube-shi, Yamaguchi-ken 755-0001 (JP)
(72) Inventor: KUNIYOSHI, Minoru c/o Glass Research Center of, Matsusaka-shi (JP); YOKO, Toshinobu, Kyoto 611-0013 (JP); TAKAHASHI, Masahide, Uji-shi, Kyoto 611-0011 (JP)
(74) Representative: Manitz, Gerhart
(86) International application number: PCT/JP2005/002737
(87) International publication number: WO 2005/082975

(57) **Abstract**

The present invention relates, in the case of producing an organic-inorganic hybrid glassy material, to a process for producing an organic-inorganic hybrid glassy material, which is **characterized in that**, after a melting or melting/aging of a raw material having meltability, a heat treatment is further conducted at a temperature that is higher than the temperature of the melting by at least 100°C.

## Description

### TECHNICAL FIELD

The present invention relates to an organic-inorganic hybrid glassy material, where raw materials used in a sol-gel process are starting materials, and also to processes for producing the same.

With regard to materials which soften at not higher than 600°C, polymer materials, low-melting glass, etc. have been famous and, for a long time, they have been used in many areas such as sealing and encapsulating materials, passivation glass, glaze, etc. Since their physical properties are different between polymer materials and low-melting glass, they have been used differently depending upon the environment in which they are used. In general, in case that heat resistance and airtight property have a priority, glass has been used, while, in the field where characteristics other than heat resistance and airtight property have a priority, organic materials represented by polymer materials have been used. However, as a result of recent progress in the art, characteristics that have not been demanded up to now have received attention, and development of materials having such characteristics has been expected.

In view of the above, development for polymer materials where heat resistance and airtight property are enhanced and for glass where a softening temperature region is made low or so-called low-melting glass has been positively carried out. Particularly in the market of electronic materials where heat resistance and airtight property are demanded, low-melting glass represented by a PbO-SiO₂-B₂O₃ series or PbO-P₂O₅-SnF₂ series glass has been a material which is indispensable in the field of sealing, coating, etc. of electronic parts. In addition, energy required for molding process or, in other words, the cost can be reduced in low-melting glass as compared with high melting point glass, and therefore that meets the recent social demand for conservation of energy. Further, when it can be melted at the temperature at which an organic material having optical function property is not destructed, its application as a host for (non-linear) optical material containing an optically functioning organic material to optical information communication devices such as optical switch is expected. As such, there has been a demand in many fields for materials having heat resistance and airtight property, which are characteristics of common melted glass, and also being apt to have various characteristics as in the case of polymer materials and, especially, the expectation is concentrated to low-melting glass. Furthermore, an organic-inorganic hybrid glass has been also receiving public attention as one of the low-melting glass.

With regard to the low-melting glass, for example, Tick glass represented by glass of an Sn-Pb-P-F-O type (refer to Non-Patent Document 1) is famous, and, since it has a glass transition point at around 100°C and also has an excellent water resistance, it has been used in some of the market. However, in this low-melting glass, since lead is contained in its main constituting components, there has been a necessity to use an alternative material due to the recent trend of environmental protection. In addition, demanded characteristic to Tick glass has been greatly changed and, at the same time, the demand as such has been diversified as well.

With regard to common methods for the production of glass, a melting method and a low-temperature synthesis method have been known. Melting method is a method where glass materials are directly heated to melt and make them into glass. Many kinds of glass are produced by this method and a low-melting glass is also produced by this method. In the case of a low-melting glass, however, there are many restrictions for glass composition that can be constituted such as that the containment of lead, alkali, bismuth, etc. is necessary for lowering its melting point.

On the other hand, with regard to a low-temperature synthesis method for noncrystalline bulks, there are sol-gel process, liquid-phase reaction method and nonaqueous acid-base reaction method. In a sol-gel process, a metal alkoxide or the like is subjected to a hydrolysis-polycondensation and subjected to a thermal treatment at the temperature of higher than 500°C (refer to Non-Patent Document 2), usually at 700 to 1,600°C, whereby a bulk can be produced. However, when the bulk produced by a sol-gel process is considered as a material for practical use, there have been many cases where the product becomes porous, due to decomposition and burning of organic materials, such as alcohol, which are introduced in the preparation of the starting solution, or evaporation and release, etc. of decomposition gas of organic materials or heating process of water. Thus, there has been a problem in terms of heat resistance and airtight property. As such, in the production of bulk by a sol-gel process, many problems have been still left unsolved, and particularly production of low-melting glass by a sol-gel process has not been carried out.

Furthermore, a liquid-phase reaction method has a low productivity because of its low yield, and in addition it uses hydrofluoric acid or the like in its reaction system and is limited for the synthesis of a thin film at best. Accordingly, it is almost impossible to use it as a practical means for the synthesis of bulks.

A nonaqueous acid-base reaction method is a means which has been developed recently and, although it is able to produce an organic-inorganic hybrid glass which is one of the low-melting glasses (refer to Non-Patent Document 3), it is still in a stage of development and all kinds of low-melting glasses cannot be produced by that.

Accordingly, the production of many kinds of low-melting glasses has been carried out not by a low-temperature synthesis method but by a melting method. Therefore, due to melting of glass materials, the glass composition thereof is limited, and, with regard to a low-melting glass that can be produced, the type thereof has been very limited.

Incidentally, at present, a low-melting glass is prominent as a material in view of heat resistance and airtight property, and it is often that the required physical property is demanded in a form of being represented by the low-melting glass. However, the material is not limited to a low-melting glass. If the required physical property is satisfied, there is no large problem in low-melting or low-softening material other than glass.

In other words, hitherto, there have not been materials that have softening points lower than those of current low-melting glasses, do not contain lead, have chemical durability, and are transparent.

In the publicly known art, there have been known a process for production of quartz glass fibers by a sol-gel process (refer to Patent Document 1), a process for production of titanium oxide fibers by a sol-gel process (refer to Patent Document 2), and a process for production of a semiconductor doped matrix by a sol-gel process (refer to Patent Document 3). There has been also disclosed a low-melting glass of a P₂O₅-TeO₂-ZnF₂ type by a melting method (refer to Patent Document 4).

Patent Document 1: JP-A-62-297236
Patent Document 2: JP-A-62-223323
Patent Document 3: JP-A-1-183438
Patent Document 4: JP-A-7-126035
Patent Document 5: JP-A-2-137737
Non-Patent Document 1: P. A. Tick, Physics and Chemistry of Glasses, Vol. 25, No. 6, pp. 149-154 (1984).
Non-Patent Document 2: K. Kamiya, S. Sakka and N. Tashiro, Yogyo Kyokaishi, 614-618, 84 (1976).
Non-Patent Document 3: M. Takahashi, H. Niida and T. Yoko, New Glass, 8-13, 17 (2002)

### SUMMARY OF THE INVENTION

It is an object of the present invention to provide a process for producing an organic-inorganic hybrid glassy material that has airtight property, is high in heat resistance, chemical durability and adhesion, has low melting point, and is transparent in an infrared region of 800-2100nm.

According to the present invention, in the case of producing an organic-inorganic hybrid glassy material, there is provided a process for producing an organic-inorganic hybrid glassy material, in which, after a melting or melting/aging of a raw material having meltability, a heat treatment is further conducted at a temperature that is higher than the temperature of the melting by at least 100°C.

### BRIEF DESCRIPTION OF THE DRAWINGS

Fig. 1 is a graph showing light transmittances in 800-2100nm according to Example 1 of the present invention and Comparative Example 1.
Fig. 2 is ²⁹Si NMR spectral charts according to Example 1 of the present invention and Comparative Example 1.
Fig. 3 is a graph showing a TMA curve according to Example 1 of the present invention.

### DETAILED DESCRIPTION

Hitherto, the production of many low-softening materials, particularly low-melting glasses, has been carried out by a melting method. Therefore, there are many restrictions for their glass compositions and, in view of melting materials for the glass raw material, a low-melting glass that can be produced is very limited.

On the other hand, when the production is carried out by a sol-gel process, which is a low-temperature synthesis method, a treatment temperature of not lower than 500°C is necessary for making the product dense. However, when the treatment is conducted at such temperature, a low-melting glass is not produced. Therefore, as a result, it has not been possible to produce a low-melting glass having good heat resistance and good airtight property. Particularly in the field of electronic materials, there have not been found low-melting glasses or low-melting materials other than glass, which cope with severe heat resistance and airtight property and with the production of low-melting ones.

The methods that are disclosed in JP-A-62-297236, JP-A-62-223323 and JP-A-1-183438 have achievements that the material production, which could be met only by high-temperature melting, was made possible even at low temperature. They, however, cannot produce low-melting glass. It is also necessary to have a treatment at not lower than 500°C after the sol-gel treatment. On the other hand, in a method of JP-A-7-126035, it is disclosed that a glass having a transition point of three hundred and several tens degrees centigrade can be produced. However, there has been no example up to now for the production of a glass having a transition point lower than that without a material for making the melting point low, such as lead and bismuth.

Thus, according to processes for production of low-melting glass up to now, it was not possible to produce a glass which satisfied severe heat resistance and airtight property, low-melting characteristic, and transparency at the same time. In addition, even in materials other than glass, there has been nothing to satisfy such characteristics. Furthermore, there has been no glass having a softening temperature of the initially produced glass of 350°C or lower, particularly 100°C or lower, nor it has been possible to easily produce that.

In contrast with this, the above-mentioned production process according to the present invention has made it possible to produce an organic-inorganic hybrid glassy material that has airtight property, that is high in heat resistance, chemical durability and adhesion, that has low melting point, and that is transparent in an infrared region of 800-2100nm, which has been considered to be extremely difficult to be produced.

Such organic-inorganic hybrid glassy material according to the present invention can be applied to the field, where low-melting glass is used, such as material for sealing and coating for display parts including PDP, material for optical information communication devices including optical switch and optical connector, materials for optical instruments including LED chips, photo-functional (nonlinear) optical material and adhesive material, and to the field where organic material such as epoxy is used. It can also be used as a substitute for a glass or ceramic that is subjected to a treatment condition of 400°C or higher or is used for a long time under an atmosphere of 400°C or higher.

In the following, the present invention is exemplarily explained. In the present invention, the raw material prior to the heat treatment is required to have meltability. Herein, meltability literally refers to a melting property, that is, a property by which viscosity greatly lowers by heating to achieve a so-called melted condition. Without this meltability, no melting nor aging can be conducted. It is preferable to conduct a heat treatment, which is conducted after melting or after melting/aging of the raw material, at a temperature higher than the temperature of melting by at least 100°C. Melting is conducted for a main purpose of homogenizing the raw material. Aging is conducted for a main purpose of slowly conducting the structural change of the raw material as a whole. The subsequent heat treatment is conducted for a main purpose of changing of a particular bonding. However, if the difference between the temperature of the melting and this heat treatment temperature is less than 100°C, a long time is necessary. Therefore, the industrial merit such as productivity is small. It is preferable that the difference between the temperature of the melting and the heat treatment temperature exceeds 150°C. It is more preferable that the difference between the temperature of the melting and the heat treatment temperature exceeds 200°C.

It is preferable that the raw material having meltability contains phenyl group. It is important that a metal unit having an organic functional group R, such as a silicon unit represented by (RₙSiO_{(4-n)/2}) (n is selected from 1, 2 and 3), is mixed into the structure of the organic-inorganic hybrid glassy material. This silicon unit is represented by a metal unit of phenyl group (PhₙSiO_{(4-n)/2}), a metal unit of methyl group (MeₙSiO_{(4-n)/2}), a metal unit of ethyl group (EtₙSiO_{(4-n)/2}), a metal unit of butyl group (BtₙSiO_{(4-n)/2}) (n = 1-3) and the like. The metal unit of phenyl group is the most effective.

It is preferable to conduct the heat treatment at a temperature of 300-650°C. A heat treatment at lower than 300°C requires an extremely long time. Therefore, an industrial merit is almost not recognized. On the other hand, if it exceeds 650°C, the reaction proceeds too rapidly, its control becomes difficult, and a problem of coloring may occur. It is more preferably 400-620°C, still preferably 500-600°C. It is necessary to conduct the heat treatment for a period of time to the extent that the organic functional group does not decompose. Therefore, for example, in case that the heat treatment is conducted at 550-600°C, the heat treatment time is preferably 30 minutes or shorter. If the heat treatment is conducted in a manner to exceed 30 minutes, the organic functional group may decompose, resulting in no obtainment of a good glassy material. It is more preferably 20 minutes or shorter, still preferably 10 minutes or shorter. For example, in case that the heat treatment is conducted at a temperature that is 500°C or higher and is lower than 550°C, the heat treatment time is preferably 3 hours or shorter. If the heat treatment is conducted in a manner to exceed 3 hours, the organic functional group may decompose, resulting in no obtainment of a good glassy material. In this case, it is more preferably 1 hour or shorter, still preferably 30 minutes or shorter. These conditions become different depending on the required specification of light transmittance in infrared region and other regions, on the kinds of organic functional groups, and on the condition that the coloring is permitted. In many cases, however, they almost become the above-mentioned conditions.

The process of the present invention has a characteristic that the reaction yield of silanol group, that is, the yield related to the reaction from silanol group to siloxane bond, is extremely high. In conventional sol-gel processes, the reaction yield upon producing an organic-inorganic hybrid glass (low-melting glass) is limited to about 95%, even in the case of conducting an aging for a long time, for example, of 1,000 hours at 200°C. Hitherto, no process exceeding 95% has been known. However, in the process of the present invention, it is possible to make the reaction yield have a value close to 100% with a short time. The difference of this 5% is significant. It is possible to obtain an organic-inorganic hybrid glass of low dielectric constant, and a further application as an insulating layer can be expected, if the silanol group can completely be removed.

Furthermore, the present invention provides an organic-inorganic hybrid glassy material produced by the above process. In particular, it is preferably an organic-inorganic hybrid glassy material having an average transmittance of 75% or higher in 800-2100nm by 3mm thickness conversion. In other words, it has a characteristic that the average transmittance in infrared region, particularly a wavelength region of 800-2100nm, is extremely higher, as compared with conventional organic-inorganic hybrid glasses. Conventional organic-inorganic hybrid glasses in general contain organic matters. Therefore, their light transmittances in infrared region have never been high, due to light absorption by organic groups, OH group and the like. In the present invention, however, it is possible to obtain a light transmittance of 75% or higher by 3mm conversion.

The ratio of T² unit to (D unit + T³ unit + T² unit + T¹ unit) is preferably 0.1 or lower. If the ratio of T² unit to (D unit + T³ unit + T² unit + T¹ unit) exceeds 0.1, the amount of light absorption in infrared region increases.

Herein, T² unit refers to a state where, in four bonds of a silicon atom, two of the three thereof, excluding the bond with an organic substituent, are bonded to silicon atoms through oxygen atoms. T³ unit means a state where, in four bonds of a silicon atom, all three thereof, excluding the bond with an organic substituent, are bonded to silicon atoms through oxygen atoms; and T¹ unit means a state where, in four bonds of a silicon atom, one of the three thereof, excluding the bond with an organic substituent, is bonded to a silicon atom through an oxygen atom. D unit comprises a D² unit where, in four bonds of a silicon atom, all two thereof excluding the bonds with organic substituents are bonded to silicon atoms through oxygen atoms, or a D¹ unit where one of them is bonded to a silicon atom through an oxygen atom, while another is bonded to an ethoxy group or hydroxyl group. Further, in the T² unit, the state where, in four bonds of a silicon atom, two of the three thereof, excluding the bond with an organic substituent, are bonded to silicon atoms. through oxygen atoms while another is an ethoxy group is named T²(-OEt). Still further, in the T² unit, the state where, in four bonds of a silicon atom, two of the three thereof, excluding the bond with an organic substituent, are bonded to silicon atoms through oxygen atoms while another is hydroxyl group is named T²(-OH). With regard to them, their presence and content can be confirmed by, for example, a ²⁹Si NMR spectroscopic method. By controlling the content of T² unit, the light absorption in infrared region is limited. As a result, it contributes to increasing the light transmittance in infrared region.

It is preferable that the so-called T unit is selected from phenyltriethoxysilane, methyltriethoxysilane and ethyltriethoxysilane. It is preferable that the so-called D unit is selected from diethoxydiphenylsilane, diethoxydimethylsilane, diethoxydiethylsilane, and diethoxymethylphenylsilane.

The softening temperature is preferably 50°C-350°C, and it is preferably an organic-inorganic hybrid glassy material having meltability. If the softening temperature is less than 50°C, its chemical stability is problematic. If it exceeds 350°C, operability becomes problematic. The softening temperature tends to change depending on its treatment. It is more preferable that the final softening temperature is 100-300°C, moreover 120-280°C. At the same time, it is required to have meltability. Without this meltability, a problem occurs in many cases in terms of adhesion that is required for infrared transmission materials in many cases. The softening temperature of the organic-inorganic hybrid glassy material was judged from TMA measurement in which the temperature had been increased at 10°C/min. In other words, the amount of shrinkage was measured under the above condition, and the temperature, at which the change of the amount of shrinkage started, was defined as softening temperature.

It is preferable that the reduction ratio of light transmission due to absorption of silanol group, in case that the light transmittance at 1100nm is set as standard, is 10% or less. If the reduction ratio of light transmittance due to absorption of silanol group exceeds 10%, for example, the selection factors in optical communication and the like decrease. Therefore, its use value diminishes. Herein, the reason why the wavelength of 1100nm was set as standard is that there are few substances that conduct light absorption in this region and therefore the light transmittance is relatively stable.

It is preferable to produce the raw material, as follows. That is, the starting raw material is a metal alkoxide. It is preferable to produce the raw material by conducting a mixing step by using a metal alkoxide as the raw material, water, acid catalyst and alcohol, followed by heating reaction step, melting step and aging step. According to this process, it stability is also high, and the production is also possible with low cost while maintaining good quality. Next preferable one is a process having at least three steps of a step of producing a gel by sol-gel process, a step of melting by heating, and an aging step. Even this process makes it possible to obtain a useful raw material. However, one to three days are necessary for the gellation step. Therefore, there is a problem that the productivity decreases. Herein, an important thing is meltability. The production is not possible by conventional sol-gel processes having no meltability.

The upper limit temperature for the heating reaction step is 100°C or lower, when an alcohol having a boiling point of higher than 100°C such as 1-butanol having a boiling point of 118°C is used. In the case of an alcohol having a boiling point of not higher than 100°C, it is desirable that the boiling point is also taken into consideration. When, for example, ethanol is used, there is a tendency that a better result is achieved when the temperature is made to be not higher than 80°C, which is its boiling point. That is likely due to the reason that, when the temperature is higher than the boiling point, alcohol suddenly evaporates whereby a homogeneous reaction is hardly achieved due to the changes of alcohol in amount and state.

It is preferable that the melting step is conducted at a temperature of 30°C to 400°C. The melting step by heating is treated in a temperature range of 30-400°C. At a temperature of lower than 30°C, melting is substantially impossible. When it is higher than 400°C, an organic group bonded to a metal element, which forms a network, burns. Therefore, a desired organic-inorganic hybrid glassy material is not obtained. In addition, disintegration takes place or bubbles are formed to give non-transparency. Preferably, it is from 100°C to 300°C.

It is preferable that, in the aging step, the treatment is conducted at a temperature of 30°C to 400°C and under a pressure of 0.1Torr or lower. At a temperature of lower than 30°C, the aging is substantially impossible. When it is higher than 400°C, a thermal decomposition may take place and it is difficult to obtain a stable glassy material. It is preferably from 100°C to 300°C. When the aging temperature is lower than the melting lower limit temperature, the effect becomes very small. Generally, it is desirable to be around from the melting lower limit temperature to "the melting lower limit temperature + 150°C". Upon this, it is preferably conducted at the same time under a pressure of 0.1 Torr or lower. If the pressure exceeds 0.1 Torr, there occurs a problem of remaining of bubbles. Furthermore, it is necessary that the time required for the aging is 5 minutes or longer. Although the aging time varies depending upon the treatment amount, the treatment temperature and the allowable residual amount of reactive hydroxyl groups (-OH), it is generally very difficult to achieve a satisfactory level when the time is shorter than 5 minutes. The productivity lowers when it is too long. Accordingly, it is preferably from 10 minutes to one week.

As a result of conducting the above melting step and/or aging step, a stabilized organic-inorganic hybrid glassy material can be prepared. In conventional sol-gel processes, there is neither melting step nor aging step, and therefore it is not possible to obtain an organic-inorganic hybrid glassy material of the present invention.

In the melting step by heating or in aging step, to conduct it in an inert atmosphere or microwave heating is also effective.

In conventional so-gel processes, hydrochloric acid or nitric acid has been used as a catalyst in many cases. This was because the gellation time becomes long in the case of other catalysts. In the mixing step of the present invention, nitric acid and other acids are not preferable, but the use of hydrochloric acid or acetic acid is preferable. A more preferable one is acetic acid. Trifluoroacetic acid is also useful.

The metal alkoxide used as the raw material is an alkoxysilane replaced with an organic substituent. It is preferably selected from metal alkoxides where the organic substituent is phenyl group, methyl group, ethyl group, propyl group (n- and i-), butyl group (n-, i- and t-), pentyl group, hexyl group, octyl group, decyl group, dodecyl group, octadecyl group, mercaptomethyl group, mercaptopropyl group, 3,3,3-trifluoropropyl group, 3-trifluoroacetoxypropyl group, vinyl group, benzyl group, styryl group or the like, and where the alkoxyl group is methoxy group, ethoxy group, propoxy group (n- and i-) or the like. These are very useful raw materials for producing an organic-inorganic hybrid glassy material, particularly a transparent material having a low softening of room temperature or lower. Metal alkoxides other than the above-mentioned ones may be used as well. Production is also possible so far as a material that has been used in sol-gel processes, such as metal acetylacetonate, metal carboxylate, metal nitrate, metal hydroxide and metal halide, is used.

With regard to alcohol, the representative ones are methanol, ethanol, 1-propanol, 2-propanol, 1-butanol, 2-methyl-1-propanol, 2-butanol, 1,1-dimethyl-1-ethanol, etc. although it is not limited to these.

It is also effective to use ammonia in the mixing step. Upon this, it is preferable that the ammonia to be used is 1 to 20 times that of hydrochloric acid or acetic acid by molar ratio. Each of ammonia, hydrochloric acid and acetic acid is a catalyst, a combination of ammonia and acetic acid or of ammonia and hydrochloric acid is taken, and only ammonia does not show a good result. If the ammonia to be used in the mixing step is in an amount less than one time that of hydrochloric acid or acetic acid, the alkoxide is not completely hydrolyzed, and a large amount of T²(-OEt) remains in the glass, thereby generating a problem of inferior chemical stability. On the other hand, if the amount to be used in the mixing step is in an amount larger than 20 times that of hydrochloric acid or acetic acid, the hydrolysis-polycondensation reaction proceeds rapidly, thereby generating a problem of not achieving a homogeneous reaction. More preferably, it is in a range of 2-10.

Furthermore, in this case, after the melting step, it is preferable to remove the ammonium salt through a pulverization/washing step. If an ammonium salt exists, a stable organic-inorganic hybrid glassy material may not be obtained.

Although all of the organic-inorganic hybrid glassy materials produced by the above process are naturally a target, it is an organic-inorganic hybrid glassy material that is partially or completely formed with a random network structure. It also has a characteristic of being lower in dielectric constant than conventional organic-inorganic hybrid glasses.
The following nonlimitative examples are illustrative of the present invention.

### EXAMPLE 1

As a starting material, there was used a metal alkoxide, phenyltriethoxysilane (PhSi(OEt)₃). As the mixing step, a catalyst, acetic acid, was added at room temperature to phenyltriethoxysilane of 10ml, water of 45ml, and ethanol of 20ml. As the heating reaction step, stirring was conducted at 60°C for 1 hour. Then, 1ml of a metal alkoxide, diethoxydiphenylsilane (Ph₂Si(OEt)₂), was added, followed by stirring at 60°C for 2 hours. Then, melting was conducted at 150°C by spending 2 hours, followed by aging at 150°C for 3 hours and then cooling to room temperature, thereby obtaining a so-called raw material that was transparent.

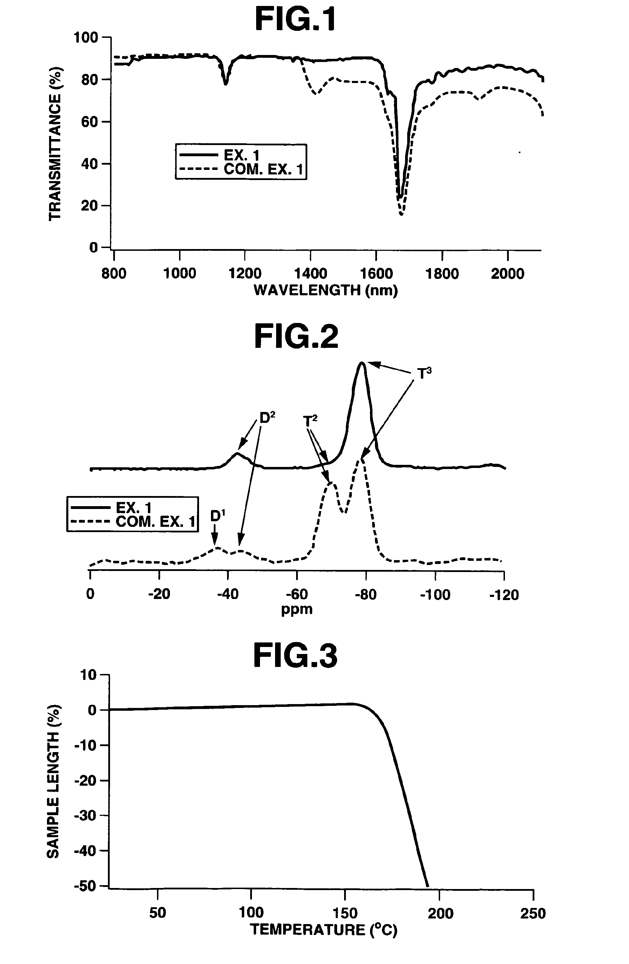

Furthermore, this raw material was subjected to a heat treatment at 500°C for 5 minutes, thereby obtaining a transparent material. This transparent material was subjected to a light transmittance measurement in 800-2100nm by a Hitachi U3500 type automatic recording spectrophotometer. The result is shown as Example 1 in Figure 1. In this region, the light absorption has greatly decreased. In particular, the decrease of the light transmittance by absorption (about 1410nm) of silanol group was as very small as 2% or less. Therefore, the light transmission has greatly increased, and the average light transmittance in 800-2100nm was about 85%.

The softening temperature of this transparent material was 169°C, which was lower than about 400°C, the decomposition temperature of phenyl group.

The bonding condition of the transparent material after the 500°C heat treatment was measured by a CMX-400 type magnetic resonance measurement apparatus of JEOL Company. The result is shown as Example 1 of Figure 2. In the drawing, positions shown as T², T³, D¹ and D² correspond to chemical shifts of respective units. The ratio of T² unit to (D² unit + T³ unit + T² unit) is 0.01 after the 500°C heat treatment, and it is understood that the value is extremely small. In view of the fact that it was possible to confirm the random network structure, the transparent material prepared in this time is a material having an organic-inorganic hybrid glass structure, that is, an organic-inorganic hybrid glassy material. As shown in Fig. 3, the softening point of the organic-inorganic hybrid glassy material was judged from a TMA measurement by raising the temperature at 10°C/minute. Fig. 3 shows the result of the present example. That is, the softening behavior was determined from the change of the amount of shrinkage under the above condition, and the starting temperature thereof was defined as the softening temperature.

In order to check the airtightness property of this organic-inorganic hybrid glassy material, an organic dye was introduced into the obtained organic-inorganic hybrid glassy material and its exudation condition after one month was observed. As a result, no exudation was noted at all whereby it was found that the material satisfied the airtightness property. Then, the transition point of this organic-inorganic hybrid glassy material, which had been allowed to stand for 300 hours in an atmosphere of 100°C, was measured, but no change was noted whereupon it was confirmed that there was no problem in heat resistance. Further, the obtained organic-inorganic hybrid glassy material was allowed to stand still in the air for one month, but no particular change was noted whereupon it was confirmed that the material was excellent in terms of chemical durability as well.

### EXAMPLE 2

As a starting material, there was used a mixture of phenyltriethoxysilane (PhSi(OEt)₃) and methyltriethoxysilane (MeSi(OEt)₃) as metal alkoxides. The ratio was set to 9:1. In a container, a catalyst, acetic acid, was added to phenyltriethoxysilane of 10ml, methyltriethoxysilane of 1ml, water of 45ml, and ethanol of 20ml. As the heating reaction step, stirring was conducted at 60°C for 3 hours. Then, melting was conducted for 4 hours by raising the temperature to 150°C. Similar to Example 1, it was cooled down to room temperature, thereby obtaining a so-called raw material that was transparent.

Furthermore, this raw material was subjected to a heat treatment at 400°C for 15 minutes, thereby obtaining a transparent material. This transparent material was subjected to a light transmittance measurement in 800-2100nm. As a result, in this region, the light absorption has greatly decreased. In particular, the decrease of the light transmittance by absorption (about 1410nm) of silanol group was as very small as 3% or less. Therefore, the light transmission has greatly increased, and the average light transmittance in 800-2100nm was about 82%.

The softening temperature of this transparent material was 180°C, which was lower than about 400°C, the decomposition temperature of phenyl group.

The bonding condition of the transparent material after the 400°C heating treatment was measured by a CMX-400 type magnetic resonance measurement apparatus of JEOL Company. The ratio of T² unit to (T³ unit + T² unit) is 0.01 after the 400°C heat treatment, and it is understood that the value is extremely small. In view of the fact that it was possible to confirm the random network structure, the transparent material prepared in this time is a material having an organic-inorganic hybrid glass structure, that is, an organic-inorganic hybrid glassy material.

In order to check the airtightness property of this organic-inorganic hybrid glassy material, an organic dye was introduced into the obtained organic-inorganic hybrid glassy material and its exudation condition after one month was observed. As a result, no exudation was noted at all whereby it was found that the material satisfied the airtightness property. Then, the transition point of this organic-inorganic hybrid glassy material, which had been allowed to stand for 300 hours in an atmosphere of 100°C, was measured, but no change was noted whereupon it was confirmed that there was no problem in heat resistance. Further, the obtained organic-inorganic hybrid glassy material was allowed to stand still in the air for one month, but no particular change was noted whereupon it was confirmed that the material was excellent in terms of chemical durability as well.

### (COMPARATIVE EXAMPLE 1)

Raw materials almost similar to and steps similar to those of Example 1 were used, but there was obtained a transparent material by omitting the final heat treatment step. The softening temperature of this transparent material was 99°C. This material was subjected to a light transmittance measurement in 800-2100nm. The result is shown in Fig. 1. The data designated by Comparative Example 1 are those of that. The average value of the light transmittance in 800-2100nm was about 79%, and the reduction of the light transmittance due to the silanol group absorption (about 1410nm) was 18%. The bonding condition of this transparent material was measured by a ²⁹Si NMR spectroscopic method. The result is shown as Comparative Example 1 of Fig. 2. The ratio of T² unit to (D¹ unit + D² unit + T³ unit + T² unit) was 0.38.

## Claims

1. In case of producing an organic-inorganic hybrid glassy material, a process for producing an organic-inorganic hybrid glassy material, which is **characterized in that**, after a melting or melting/aging of a raw material having meltability, a heat treatment is further conducted at a temperature that is higher than the temperature of the melting by at least 100°C.

2. A process for producing an organic-inorganic hybrid glassy material according to claim 1, which is **characterized in that** the raw material having meltability contains a phenyl group.

3. A process for producing an organic-inorganic hybrid glassy material according to claim 1 or claim 2, which is **characterized in that** the heat treatment is conducted at from 300°C to 650°C.

4. An organic-inorganic hybrid glassy material produced by a process according to any of claims 1 to 3.

5. An organic-inorganic hybrid glassy material according to claim 4, which is **characterized in** having an average transmittance of 75% or higher in 800-2100nm by conversion to 3mm thickness.

6. An organic-inorganic hybrid glassy material according to claim 4 or claim 5, which is **characterized in** having a softening temperature of 50°C to 350°C and having meltability.

7. An organic-inorganic hybrid glassy material according to any of claims 4 to 6, which is **characterized in that** a ratio of T² unit to (D unit + T³ unit + T² unit + T¹ unit) is 0.1 or lower,
wherein T² unit refers to one under a state where, in four bonds of a silicon atom, two of the three thereof, excluding the bond with an organic substituent, are bonded to silicon atoms through oxygen atoms; T³ unit refers to one under a state where, in four bonds of a silicon atom, all three thereof, excluding the bond with an organic substituent, are bonded to silicon atoms through oxygen atoms; T¹ unit refers to one under a state where, in four bonds of a silicon atom, one of the three thereof, excluding the bond with an organic substituent, is bonded to a silicon atom through an oxygen atom; and D unit refers to one under a state where, in four bonds of a silicon atom, all two or one thereof, excluding the bonds with organic substituents, is bonded to a silicon atom through an oxygen atom.

8. An organic-inorganic hybrid glassy material according to any of claims 4 to 7, which is **characterized in that** a reduction rate of light transmittance due to absorption of a silanol group is 10% or less in case that light transmittance at 1100nm has been set as a standard.

9. An organic-inorganic hybrid glassy material according to any of claims 4 to 8, which is **characterized in that** the glassy material is partially or completely formed with a random network structure.

10. An organic-inorganic hybrid glassy material according to any of claims 4 to 9, which is **characterized in** containing a phenyl group.
